# EUROPÄISCHE PATENTANMELDUNG

(11) **EP 2 156 998 A1**
(43) Veröffentlichungstag der Anmeldung: **24.02.2010**
(21) Anmeldenummer: 09100353.3
(22) Anmeldetag: 01.07.2009
(51) Int. Cl.: B60R 25/04

(54) **Verfahren und Vorrichtung zum Betreiben eines Fahrzeugantriebs eines Fahrzeugs**

(30) Priorität: 20.08.2008 DE 102008041357
(71) Anmelder: Robert Bosch GmbH, 70442 Stuttgart (DE)
(72) Erfinder: Bosse, Carsten, 71638, Ludwigsburg (DE)

(57) **Zusammenfassung**

Die Erfindung betrifft ein Verfahren zum Betreiben eines Fahrzeugantriebs (6) eines Fahrzeugs (1) während eines Fahrzeugstillstands bei laufendem Fahrzeugantrieb (6), mit folgenden Schritten:
- Aktivieren eines gesicherten Zustands des Fahrzeugs (1),
- Verlassen des Fahrzeugs (1) unter Mitnahme eines zum Aufheben des gesicherten Zustands dienenden Entsperrelements (16),
- selbstständige Prüfung auf Vorhandensein des Entsperrelements (16) bei Inbewegungsetzen (17) des Fahrzeugs (1),
- selbstständiges Ausschalten des Fahrzeugsantriebs (6) und/oder Unterbrechung der Kraftübertragung des Fahrzeugantriebs (6), wenn bei dem Inbewegungsetzen (17) des Fahrzeugs (1) das Entsperrelement (16) nicht vorhanden ist, und
- selbstständiges Aufheben des gesicherten Zustandes, wenn beim Inbewegungsetzen (17) des Fahrzeugs (1) das Entsperrelement (16) vorhanden ist.

Weiter betrifft die Erfindung eine Vorrichtung zum Aktivieren eines gesicherten Zustands des Fahrzeugs (1).

## Beschreibung

Die Erfindung betrifft ein Verfahren zum Betreiben eines Fahrzeugantriebs eines Fahrzeugs während eines Fahrzeugstillstands bei laufendem Fahrzeugantrieb. Die Erfindung betrifft ferner eine hierauf gerichtete Vorrichtung.

### Stand der Technik

Fahrzeuge werden von den Fahrzeugführern/Fahrern häufig mit laufendem Antrieb, also laufendem Motor, kurzzeitig oder auch längerfristig verlassen. Solches Verhalten ist insbesondere im kommunalen Bereich, bei Auslieferungsdiensten (Postzustellung oder Paketzustellung) oder auf Baustellen zu beobachten. Dies ist dadurch begründet, dass der laufende Fahrzeugantrieb (Motor) für eine Funktion von Fahrzeugeinrichtungen auch während des Fahrzeugstillstands erforderlich ist, beispielsweise für das Drehen der Mischtrommel von Betonmischern oder für die Funktion einer Fahrzeugklimaanlage, oder ist in einer Bequemlichkeit des Fahrers begründet, der das Fahrzeug nicht bei jedem Verlassen abschalten und nach seiner Rückkehr neu starten will. Der Zündschlüssel oder Chips von Keyless-go-Systemen verbleiben hierbei im Fahrzeug, wodurch das Fahrzeug einem erhöhten Dienstahlrisiko ausgesetzt ist; es ist für einen Dritten leicht möglich, ein derart mit laufendem Fahrzeugantrieb abgestelltes Fahrzeug zu entwenden.

Aufgabe der Erfindung ist es, ein Verfahren und eine Vorrichtung bereitzustellen, wodurch die Entwendung von mit laufendem Fahrzeugantrieb abgestellten Fahrzeugen verhindert werden kann.

### Offenbarung der Erfindung

Hierzu wird ein Verfahren zum Betreiben eines Fahrzeugsantriebs eines Fahrzeugs während eines Fahrzeugstillstands bei laufendem Fahrzeugantrieb vorgeschlagen, das folgende Schritte aufweist:
- Aktivieren eines gesicherten Zustands des Fahrzeugs,
- Verlassen des Fahrzeugs unter Mitnahme eines zum Aufheben des gesicherten Zustands dienenden Entsperrelements,
- selbstständige Prüfung auf Vorhandensein des Entsperrelements bei Inbewegungsetzen des Fahrzeugs,
- selbstständiges Ausschalten des Fahrzeugantriebs und/oder Unterbrechung der Kraftübertragung des Fahrzeugantriebs, wenn bei dem Inbewegungsetzen des Fahrzeugs das Entsperrelement nicht vorhanden ist, und
- selbstständiges Aufheben des gesicherten Zustandes, wenn beim Inbewegungsetzen des Fahrzeugs das Entsperrelement vorhanden ist.

Es wird ein gesicherter Zustand des Fahrzeugs aktiviert. Das Fahrzeug wird verlassen, wobei ein Entsperrelement mitgenommen wird, das zum Aufheben des gesicherten Zustands erforderlich ist. Wird das Fahrzeug nun in Bewegung gesetzt, prüft dieses selbstständig auf das Vorhandensein des Entsperrelements. Ist das Entsperrelement bei Inbewegungsetzen des Fahrzeugs nicht vorhanden, erfolgt ein selbstständiges Ausschalten des Fahrzeugantriebs und/oder eine Unterbrechung der Kraftübertragung des Fahrzeugantriebs. Ist bei Inbewegungsetzen des Fahrzeugs das Entsperrelement vorhanden, wird der gesicherte Zustand aufgehoben. Der gesicherte Zustand kennzeichnet demzufolge einen solchen Zustand, in dem das Fahrzeug auf das Vorhandensein des Entsperrelements bei Inbewegungsetzen des Fahrzeugs prüft und, abhängig vom Ergebnis dieser Prüfung, diesen gesicherten Zustand wieder aufhebt oder aber den Fahrzeugantrieb abschaltet beziehungsweise die Kraftübertragung des Fahrzeugantriebs unterbricht. Ist demzufolge, beispielsweise bei einem Diebstahlsversuch, das Entsperrelement nicht vorhanden, wenn der Dieb das Fahrzeug in Bewegung setzen möchte, so wird der Fahrzeugantrieb abgeschaltet und/oder die Kraftübertragung des Fahrzeugantriebs unterbrochen (beispielsweise durch erzwungene Neutralstellung eines Automatikgetriebes oder eine Zwangsöffnung einer Kupplung). Zum Abschalten des Fahrzeugantriebs kann hierbei eine im Stand der Technik geläufige Wegfahrsperre herangezogen werden.

Ein Fahrzeuginsasse, insbesondere nämlich ein Fahrzeugführer/Fahrer, betätigt in einer weiteren Verfahrensausbildung ein Bedienelement, etwa dann, wenn das Fahrzeug verlassen werden soll, falls hierbei beabsichtigt ist, dass im Fahrzeugstillstand der Fahrzeugantrieb weiterlaufen soll. Durch dieses Betätigen des Bedienelements wird der gesicherte Zustand aktiviert. Das Aktivieren des gesicherten Zustands erfolgt demzufolge durch eine gezielte Betätigung des Bedienelements. Der Fahrer ist demzufolge in seiner Entscheidung frei, ob der gesicherte Zustand aktiviert werden soll oder nicht.

Das Betätigen des Bedienelements erfolgt hierbei bevorzugt dann durch einen Fahrzeuginsassen, wenn das Fahrzeug im Fahrzeugstillstand bei laufendem Fahrzeugantrieb verlassen werden soll. Der gesicherte Zustand wird demzufolge erst dann aktiviert, wenn tatsächlich auch ein Verlassen des Fahrzeugs beabsichtigt ist.

In einer anderen Verfahrensausbildung ist vorgesehen, dass das Aktivieren des gesicherten Zustands des Fahrzeugs bei Starten des Fahrzeugantriebs erfolgt und/oder durch Betätigen des Bedienelements durch einen Fahrzeuginsassen. Der gesicherte Zustand kann hierbei bereits mit dem Anlassen des Fahrzeugantriebs, insbesondere dem Starten des Motors, eingeleitet werden; das Fahrzeug ist dann in einem gesicherten Zustand, ohne dass eine willentliche Handlung beispielsweise des Fahrers erforderlich wäre; gleichzeitig kann der Fahrer den gesicherten Zustand aber auch nicht willentlich vermeiden. Gerade in Situationen, in denen mit Nachlässigkeiten von Fahrern zu rechnen ist, beispielsweise das Vergessen der Aktivierung des gesicherten Zustands, ist diese Verfahrensausbildung vorteilhaft. Die Aktivierung des gesicherten Zustandes kann aber auch jederzeit durch Betätigen des Bedienelements durch einen Fahrzeuginsassen, insbesondere nämlich wieder den Fahrer, erfolgen. Hierbei wird bei jedem Inbewegungsetzen, also insbesondere auch im regulären Normalbetrieb des Fahrzeugs, auf das Vorhandensein des Entsperrelements geprüft. Um unerwünschte Dynamikeinbußen des Fahrzeugantriebs zu vermeiden, da diese Überprüfung mit Rückmeldung stets eine gewisse Zeit in Anspruch nimmt, ist hierbei denkbar, dass nur bestimmte Überprüfungsweisen, wie sie nachfolgend beschrieben werden, herangezogen werden, insbesondere nämlich solche, die sich nicht in unerwünschter Weise auf die Fahrdynamik des Fahrzeugs auswirken. Insbesondere kann auch vorgesehen sein, dass bei Einleitung der Prüfung auf Vorhandensein des Entsperrelements eine gewisse Verzögerung, beispielsweise im Sinne einer Hysterese vorgesehen ist, wobei nach Ablauf eines gewissen Zeitfensters, in dem das Entsperrelement nicht erkannt werden konnte, der Antrieb abstirbt und/oder die Kraftübertragung des Fahrzeugantriebs unterbrochen wird.

In einer Verfahrensausbildung ist vorgesehen, dass als Entsperrelement ein Schlüssel, insbesondere ein Fahrzeugschlüssel, verwendet wird. Besonders bevorzugt wird der reguläre Fahrzeugschlüssel für das Fahrzeug als Entsperrelement verwendet. Zum Starten des Fahrzeugs wird, wie bekannt, der Fahrzeugschlüssel in das Zündschloss eingeführt und dieses in eine hierfür vorgesehene Stellung verbracht, wodurch Klemme 15 spannungsbeaufschlagt wird und, bei solchermaßen ausgerüsteten Fahrzeugen, eine Wegfahrsperre deaktiviert wird. Wird bei Aktivieren des gesicherten Zustands und Verlassen des Fahrzeugs das Entsperrelement, also der Fahrzeugschlüssel, mitgenommen, so muss hierfür bei Aktivieren des gesicherten Zustandes eine Verbindung und Abhängigkeit einer Motorsteuerung, insbesondere eines Motorsteuergeräts, von Klemme 15 aufgehoben werden, oder aber Klemme 15 wird im gesicherten Zustand nicht spannungsfrei geschaltet, um ein Abstellen des Fahrzeugantriebs, das hier gerade unerwünscht ist, zu verhindern. Der Fahrzeugschlüssel kann demzufolge bei aktiviertem gesichertem Zustand nach Betätigung des Bedienelements aus dem Zündschloss entfernt werden, wobei üblicherweise das Zündschloss auf Nullstellung gedreht werden muss. Dies beeinflusst im gesicherten Zustand aber den Fahrzeugantrieb nicht, der trotz Abziehen des Fahrzeugschlüssels weiter läuft, sofern der gesicherte Zustand aktiviert ist.

In einer anderen Verfahrensausbildung wird als Entsperrelement ein Chip, insbesondere ein Chip eines Keyless-go-Systems, verwendet. Keyless-go-Systeme sind bekannt. Insbesondere in einer Ausbildung als Chipkarte werden diese entweder vom Fahrer am Mann getragen oder in einer sonstigen Art und Weise in den Innenraum des Fahrzeugs verbracht, beispielsweise in dort vorgesehene Halterungen, und beim Starten des Fahrzeugs auf Vorhandensein abgefragt. Ist ein solcher Chip vorhanden, startet das Fahrzeug, beispielsweise bei Betätigung eines hierfür vorgesehenen Startknopfes. Ist der Chip nicht vorhanden, startet das Fahrzeug nicht, eine eventuell vorhandene Wegfahrsperre bleibt aktiviert. Wird nun der gesicherte Zustand durch Betätigen des Bedienelements aktiviert, wird das Vorhandensein des Chips auch dann abgefragt, wenn das Fahrzeug in Bewegung gesetzt werden soll, nicht nur bei Betätigung des Startknopfes zum erstmaligen Anlassen des Fahrzeugantriebs nach einem Stillstand des Fahrzeugantriebs. Das Entfernen des Chips bewirkt für sich allein genommen also nicht das Abstellen des Fahrzeugantriebs. Der Fahrzeugantrieb läuft weiter, auch dann, wenn der Chip aus dem Fahrzeuginnenraum oder aus der Nähe des Fahrzeugs überhaupt entfernt wird. Soll das Fahrzeug aber in Bewegung gesetzt werden, wird, wie beim Starten des Fahrzeugantriebs, auf das Vorhandensein des Chips geprüft. Ist der Chip nicht vorhanden, wird entweder der Fahrzeugantrieb abgestellt und/oder die Kraftübertragung des Fahrzeugantriebs unterbrochen, wie bereits vorstehend beschrieben.

Bevorzugt ist vorgesehen, dass als Bedienelement ein Taster, insbesondere ein im Fahrzeuginneren angeordneter Taster, verwendet wird. Taster sind billige und zuverlässige Bauteile, die in großer Vielfalt und Auswahl verfügbar sind.

Bevorzugt erfolgt ein Erkennen des Inbewegungsetzens des Fahrzeugs über ein Sensieren eine Betätigung einer Kupplung oder einer Gang-/Fahrstufenwahleinrichtung. Zum Inbewegungsetzen ist bei Schaltgetrieben das Betätigen der Kupplung und das Einlegen eines Ganges erforderlich, bei automatischen Getrieben die Betätigung der Fahrstufenwahleinrichtung (beispielsweise von Neutral auf Drive). Eine solche Betätigung erfolgt stets nur dann, wenn das Fahrzeug auch tatsächlich in Bewegung gesetzt werden soll, sie ist also hinreichende Bedingung für das Vorliegen eines Versuches des Inbewegungsetzens. Diese Sensierung ist sehr leicht zu bewerkstelligen, beispielsweise über einfache elektrische Schaltkontakte, wie sie an den entsprechenden Bestandteilen des Fahrzeugs, etwa am Kupplungspedal oder der Gang-/Fahrstufenwahleinrichtung ohnehin vorhanden sind oder aber leicht und günstig angebracht werden können.

In einer anderen Verfahrensausbildung erfolgt ein Erkennen des Inbewegungsetzens des Fahrzeugs über eine Erkennung einer Momentenanforderung, insbesondere Betätigung eines Gaspedals. Auch die Betätigung des Gaspedals, wie sie zum Momentenanforderung über den Antriebsstrang durch den Fahrer erfolgt, ist hinreichend für einen Versuch des Inbewegungsetzens des Fahrzeugs. Auch eine solche Momentenanforderung ist mit im Fahrzeug bereits vorhandenen Sensierungs- und Signalisierungseinrichtungen leicht zu bewerkstelligen, insbesondere auch über Signalisierungen des Steuergeräts.

In einer weiteren Verfahrensausbildung erfolgt die Erkennung des Inbewegungsetzens des Fahrzeugs über ein über den Antriebsstrang erfasstes Wegstreckensignal. Hierbei wird im weitesten Sinne eine Bewegung des Fahrzeugs, beispielsweise über eine Bewegung der Räder, erfasst, wobei hier, im Gegensatz zu den vorstehend beschriebenen Möglichkeiten des Erkennens des Inbewegungsetzens das Fahrzeug bereits in Bewegung befindlich sein muss.

Weiter wird eine Vorrichtung zum Sichern eines Fahrzeugantriebs eines Fahrzeugs während eines Fahrzeugstillstands bei laufendem Fahrzeugantrieb vorgeschlagen, wobei ein zum Aktivieren eines gesicherten Zustands des Fahrzeugs dienendes Bedienelement und ein zum Aufheben des gesicherten Zustands dienendes Entsperrelement vorgesehen sind.

In einer bevorzugten Ausführungsform ist ein Aufnehmer zur Prüfung auf Inbewegungsetzen des Fahrzeugs vorgesehen. Der Aufnehmer erkennt in einer der vorstehend beschriebenen Weisen, ob das Fahrzeug in Bewegung gesetzt werden soll. Liegt hierbei der gesicherte Zustand vor, ohne dass das Entsperrelement vorhanden ist, erfolgt die Abschaltung des Fahrzeugantriebs und/oder die Unterbrechung der Kraftübertragung im Fahrzeugantrieb.

Weitere vorteilhafte Ausführungsformen ergeben sich aus den Unteransprüchen und aus Kombinationen derselben.

### Kurze Beschreibung der Zeichnungen

Die Erfindung wird nachfolgend anhand eines Ausführungsbeispiels näher erläutert, ohne aber hierauf beschränkt zu sein.

Es zeigt die
- Figur: ein Fahrzeug mit einer Vorrichtung zum Sichern eines Fahrzeugantriebs während eines Fahrzeugstillstands bei laufendem Fahrzeugantrieb.

### Ausführungsform(en) der Erfindung

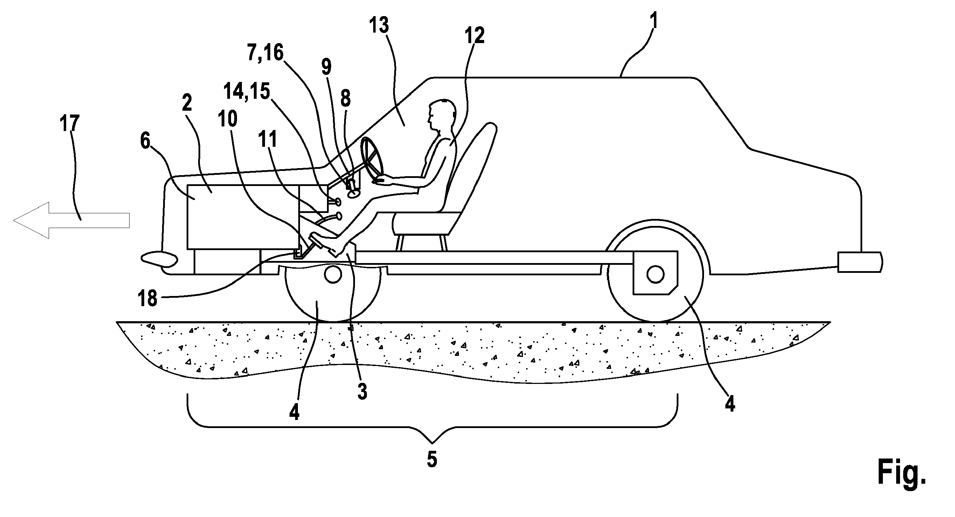

Die Figur zeigt ein Fahrzeug 1, das zu seinem Antrieb einen aus Motor 2 als Fahrzeugantrieb 6, Getriebe 3 und Rädern 4 aufgebauten Antriebsstrang 5 aufweist. Zum Starten des Fahrzeugantriebs 6, insbesondere des Motors 2, wird ein Fahrzeugschlüssel 7 in ein Zündschloss 8 an einer Lenksäule 9 eingeführt und in die entsprechende Stellung gedreht. Hierdurch wird der Motor 2 gestartet und das Fahrzeug 1 kann fortbewegt werden. Zum Einkuppeln des Motors, also zur Momentübertragung vom Motor 2 auf die Räder 4, ist ein Kupplungspedal 10 vorgesehen. Das Getriebe 3 weist zur Gangwahl einen Schalthebel 11 auf, der bei gedrehtem Kupplungspedal 10 betätigt wird. Ein Fahrer 12 des Fahrzeugs 1 wird, um das Fahrzeug 1 bei laufendem Fahrzeugantrieb 6 zu verlassen, das Kupplungspedal 10 treten und den Schalthebel 11 in eine Neutralstellung bringen, so dass der Antriebsstrang 5 derart unterbrochen ist, dass keine Kraftübertragung vom Motor 2 auf die Räder 4 stattfindet. Wenn er das Fahrzeug wieder besteigt und es in Bewegung setzen will, wird er bei getretenem Kupplungspedal 10 mittels des Schalthebels 11 einen Gang einlösen und das Kupplungspedal 10 zum Zwecke des Einkuppelns des Getriebes 3 zur Herstellung der Momentübertragung von Motor 2 auf die Räder 4 lösen.

Will der Fahrer 12 das Fahrzeug 1 bei laufendem Fahrzeugantrieb 6 verlassen, wobei das Fahrzeug 1 stillsteht, beispielsweise geparkt ist und eine nicht dargestellte Feststellbremse betätigt ist, kann er zur Verhinderung eines Fahrzeugdiebstahls oder eines unbefugten Inbewegungsetzens 17 ein in einem Fahrzeuginnenraum 13 des Fahrzeugs 1 angeordnetes Bedienelement 14, beispielsweise einen Taster 15, einen gesicherten Zustand herbeiführen, bei dem die im gezeigten Ausführungsbeispiel, bei dem das Fahrzeug 1 über den Fahrzeugschlüssel 7 gestartet wird, die fahrzeugschlüsselabhängige Kopplung der Stellung des Zündschlosses 8 an die nicht dargestellte Klemme 15 der nicht dargestellten Bordspannungsversorgung des Fahrzeugs 1 aufgehoben wird; der Motor 2, also der Fahrzeugantrieb 6, kann in diesem Fall weiter laufen, auch wenn der Fahrzeugschlüssel 7 aus dem Zündschloss 8 nach Rückführen des Zündschlüssels 8 in die Null-Stellung abgezogen wird. In diesem gesicherten Zustand verlässt der Fahrer 12 das Fahrzeug 1. Der Fahrzeugschlüssel 7 dient hierbei als Entsperrelement 16, mit dem bei Rückkehr des Fahrers 12 zum Fahrzeug 1 der gesicherte Zustand aufgehoben werden kann. Wird im gesicherten Zustand ohne Vorhandensein des Entsperrelements 16 ein Inbewegungsetzen 17 des Fahrzeugs 1 versucht, wird der Fahrzeugantrieb 6 abgeschaltet und/oder der Antriebsstrang 5 unterbrochen, beispielsweise durch eine erzwungene Neutralstellung des Getriebes 3. Bei Inbewegungsetzen 17 des Fahrzeugs 1 wird folglich auf das Vorhandensein des Entsperrelements 16 im Fahrzeug 1 geprüft. Ist das Entsperrelement 16 bei Inbewegungsetzen 17 vorhanden, wird eine Wegfahrsperre aufgehoben und der Normalbetrieb des Fahrzeugs 1 ermöglicht. Ist das Entsperrelement 16 bei Inbewegungsetzen 17 hingegen nicht vorhanden, wird, wie beschrieben, der Fahrzeugantrieb 6 abgeschaltet und/oder der Antriebsstrang 5 unterbrochen. Ein Inbewegungsetzen 17 des Fahrzeugs 1 ist dann nicht möglich. Ein Testen auf Inbewegungsetzen 17 während des gesicherten Zustandes erfolgt beispielsweise durch einen Aufnehmer 18, der an solchen Bedienelementen des Fahrzeugs 1 angebracht ist oder im Stand der Technik bereits vorhanden ist, die zum Inbewegungsetzen 17 betätigt werden müssen, beispielsweise im vorliegend beschriebenen Ausführungsbeispiel mit mechanischem Getriebe an dem Kupplungspedal 10.

Ausführungsformen, in denen statt des Fahrzeugschlüssels 7 beispielsweise ein Chip eines Keyless-go-Systems verwendet werden, sind selbstverständlich ebenfalls möglich; der Chip tritt hierbei an die Stelle des Fahrzeugschlüssels 7, im gesicherten Zustand wird auf dessen Vorhandensein geprüft.

## Patentansprüche

1. Verfahren zum Betreiben eines Fahrzeugantriebs (6) eines Fahrzeugs (1) während eines Fahrzeugstillstands bei laufendem Fahrzeugantrieb (6), mit folgenden Schritten:
- Aktivieren eines gesicherten Zustands des Fahrzeugs (1),
- Verlassen des Fahrzeugs (1) unter Mitnahme eines zum Aufheben des gesicherten Zustands dienenden Entsperrelements (16),
- selbstständige Prüfung auf Vorhandensein des Entsperrelements (16) bei Inbewegungsetzen (17) des Fahrzeugs (1),
- selbstständiges Ausschalten des Fahrzeugsantriebs (6) und/oder Unterbrechung der Kraftübertragung des Fahrzeugantriebs (6), wenn bei dem Inbewegungsetzen (17) des Fahrzeugs (1) das Entsperrelement (16) nicht vorhanden ist, und
- selbstständiges Aufheben des gesicherten Zustandes, wenn beim Inbewegungsetzen (17) des Fahrzeugs (1) das Entsperrelement (16) vorhanden ist.

2. Verfahren nach Anspruch 1, **dadurch gekennzeichnet, dass** das Aktivieren des gesicherten Zustands des Fahrzeugs (1) durch das Betätigen eines Bedienelements (14) des Fahrzeugs (1) erfolgt.

3. Verfahren nach einem der vorhergehenden Ansprüche, **dadurch gekennzeichnet, dass** das Betätigen des Bedienelements (14) durch einen Fahrzeuginsassen erfolgt, wenn das Fahrzeug (1) im Fahrzeugstillstand bei laufendem Fahrzeugantrieb (6) verlassen werden soll.

4. Verfahren nach einem der vorhergehenden Ansprüche, **dadurch gekennzeichnet, dass** das Aktivieren des gesicherten Zustandes des Fahrzeugs (1) bei Starten des Fahrzeugsantriebs (6) erfolgt und/oder durch Betätigen des Bedienelements (14) durch einen Fahrzeuginsassen.

5. Verfahren nach einem der vorhergehenden Ansprüche, **dadurch gekennzeichnet, dass** als Entsperrelement (16) ein Schlüssel, insbesondere ein Fahrzeugschlüssel (7), verwendet wird.

6. Verfahren nach einem der vorhergehenden Ansprüche, **dadurch gekennzeichnet, dass** als Entsperrelement (16) ein Chip, insbesondere ein Chip eines Keyless-go-Systems, verwendet wird.

7. Verfahren nach einem der vorhergehenden Ansprüche, **dadurch gekennzeichnet, dass** als Bedienelement (14) ein Taster (15), insbesondere ein im Fahrzeuginneren angeordneter Taster (15), verwendet wird.

8. Verfahren nach einem der vorhergehenden Ansprüche, **dadurch gekennzeichnet, dass** ein Erkennen des Inbewegungsetzens (17) des Fahrzeugs (1) über ein Sensieren einer Betätigung einer Kupplung oder einer Gang-/Fahrstufenwahleinrichtung erfolgt.

9. Verfahren nach einem der vorhergehenden Ansprüche, **dadurch gekennzeichnet, dass** ein Erkennen des Inbewegungsetzens (17) des Fahrzeugs (1) über eine Erkennung einer Momentenanforderung, insbesondere Betätigung eines Gaspedals, erfolgt.

10. Verfahren nach einem der vorhergehenden Ansprüche, **dadurch gekennzeichnet, dass** die Erkennung des Inbewegungsetzens (17) des Fahrzeugs (1) über ein über den Antriebstrang (5) erfasstes Wegstreckensignal erfolgt.

11. Vorrichtung zum Sichern eines Fahrzeugsantriebs eines Fahrzeugs während eines Fahrzeugstillstands bei laufendem Fahrzeugantrieb, **gekennzeichnet durch** ein zum Aktivieren eines gesicherten Zustands des Fahrzeugs (1) dienendes Bedienelement (14) und ein zum Aufheben des gesicherten Zustands dienendes Entsperrelement (16).

12. Vorrichtung nach Anspruch 11, **dadurch gekennzeichnet, dass** ein Aufnehmer (18) zur Prüfung auf Inbewegungsetzen (17) des Fahrzeugs (1) vorgesehen ist.
